# EUROPÄISCHE PATENTANMELDUNG

(11) **EP 3 241 652 A1**
(43) Veröffentlichungstag der Anmeldung: **08.11.2017**
(21) Anmeldenummer: 17153260.9
(22) Anmeldetag: 26.01.2017
(51) Int. Cl.: B25D 17/06, B25D 17/26

(54) **LAGERVORRICHTUNG**

(30) Priorität: 18.03.2016 DE 102016204498
(71) Anmelder: Robert Bosch GmbH, 70442 Stuttgart (DE)
(72) Erfinder: Mayer, Michael, 75446 Wiernsheim (DE); Riedel, Andreas, 70794 Filderstadt (DE); Schmid, Lars, 72622 Nuertingen (DE); Henke, Thilo, 70771 Leinfelden-Echterdingen (DE); Koalick, Jan, 70771 Leinfelden-Echterdingen (DE)

(57) **Zusammenfassung**

Die Erfindung geht aus von einer Lagervorrichtung (10), insbesondere für eine Schlagwerkeinheit (12) einer Handwerkzeugmaschine (14), mit zumindest einem Lagerelement (16), das zumindest eine Lagerlauffläche (18) aufweist, und mit zumindest einer Schmierstofftasche (20) zu einer Schmierung zumindest eines Teils der Lagerlauffläche (18) des zumindest einen Lagerelements (16).

Es wird vorgeschlagen, dass die zumindest eine Schmierstofftasche (20) zumindest teilweise durch ein zerspanungsfreies Fertigungsverfahren in das zumindest eine Lagerelement (16) eingebracht ist.

## Beschreibung

### Stand der Technik

Es sind bereits Zylinderlaufflächen mit integrierten Schmierstofftaschen, die durch eine Drehbearbeitung oder durch einen Honprozess in die Zylinderlaufflächen eingebracht sind, vorgeschlagen worden.

### Offenbarung der Erfindung

Die Erfindung geht aus von einer Lagervorrichtung, insbesondere für eine Schlagwerkeinheit einer Handwerkzeugmaschine, mit zumindest einem Lagerelement, das zumindest eine Lagerlauffläche aufweist, und mit zumindest einer Schmierstofftasche zu einer Schmierung zumindest eines Teils der Lagerlauffläche des zumindest einen Lagerelements.

Es wird vorgeschlagen, dass die zumindest eine Schmierstofftasche zumindest teilweise durch ein zerspanungsfreies Fertigungsverfahren in das zumindest eine Lagerelement eingebracht ist. Dadurch kann eine vorteilhaft zeitsparende und kostengünstige Herstellung der Lagervorrichtung erreicht werden. Zudem können eine bevorzugt gute Schmierung und ein vorteilhaft geringer Verschleiß der Lagervorrichtung erreicht werden.

Die Lagervorrichtung bildet vorzugsweise zumindest einen Teil einer Schlagwerkeinheit einer Handwerkzeugmaschine. Das Lagerelement ist bevorzugt als ein Funktionsbauteil der Schlagwerkeinheit, insbesondere als Hammerrohr, ausgebildet. Es ist jedoch auch denkbar, dass das Lagerelement auf eine andere, einem Fachmann als sinnvoll erscheinende Weise, wie beispielsweise als Hammerkolben oder als Schläger, ausgebildet ist. Die Lagerlauffläche ist vorzugsweise als Gleitfläche ausgebildet. Unter einer "Schmierung" soll in diesem Zusammenhang insbesondere eine Bildung eines Schmierfilms zu einer Reduzierung einer Reibung, insbesondere einer Gleitreibung, verstanden werden. Vorzugsweise kann ein Reibungswert gegenüber einer ungeschmierten Relativbewegung zwischen dem Lagerelement und dem weiteren Lagerelement, bei der das Lagerelement und das weitere Lagerelement sich insbesondere direkt kontaktieren, insbesondere um zumindest 10 %, vorzugsweise um zumindest 25 %, vorzugsweise um zumindest 50 % und besonders bevorzugt um zumindest 75 % reduziert werden. Die zumindest eine Schmierstofftasche ist vorzugsweise von einer Vertiefung in einer Oberfläche, insbesondere in der Lagerlauffläche, des Lagerelements zur Aufnahme von einem Schmierstoff gebildet. Das zerspanungsfreie Fertigungsverfahren kann als elektro-chemische Metallbearbeitung und/oder als Strahlen, insbesondere um einen definierten Traganteil, ausgebildet sein.

Ferner wird vorgeschlagen, dass die zumindest eine Schmierstofftasche zumindest teilweise durch eine elektro-chemische Metallbearbeitung in das zumindest eine Lagerelement eingebracht ist. Dadurch kann eine bevorzugt präzise und vorteilhaft kostengünstige Ausgestaltung der zumindest einen Schmierstofftasche erreicht werden. Ferner kann durch die elektro-chemische Metallbearbeitung eine Einbringung der zumindest einen Schmierstofftasche auch in ein Lagerelement, das zumindest teilweise aus einem Nichteisenmetall (NE-Metall), insbesondere aus Aluminium, gebildet ist, ermöglicht werden. Die zumindest eine Schmierstofftasche ist zumindest teilweise durch Elysieren in das zumindest eine Lagerelement eingebracht. Es ist jedoch auch denkbar, dass die zumindest eine Schmierstofftasche zumindest teilweise durch ein anderes, einem Fachmann als sinnvoll erscheinendes elektro-chemisches Verfahren, wie beispielsweise als PECM-Verfahren (Pulsed Electrochemical Machining) oder als PEM-Verfahren (Precise Electrochemical Machining), in das zumindest eine Lagerelement eingebracht ist.

Des Weiteren wird vorgeschlagen, dass die Lagervorrichtung zumindest ein weiteres Lagerelement umfasst, das zumindest eine korrespondierende Lagerlauffläche aufweist, wobei das zumindest eine Lagerelement und das zumindest eine weitere Lagerelement zumindest teilweise aus unterschiedlichen Materialien gebildet sind. Dadurch können vorteilhaft gute Lagereigenschaften und eine bevorzugt flexible Anpassung der Lagervorrichtung an jeweilige Anforderungen erreicht werden. Das weitere Lagerelement ist vorzugsweise, insbesondere relativ zu dem Lagerelement, beweglich gelagert. Der Ausdruck "beweglich gelagert" soll hier insbesondere eine Lagerung einer Einheit und/oder eines Elements definieren, wobei die Einheit und/oder das Element, insbesondere entkoppelt von einer elastischen Verformung der Einheit und/oder des Elements, eine Bewegungsmöglichkeit entlang zumindest einer Strecke insbesondere größer als 10 mm, bevorzugt größer als 30 mm und besonders bevorzugt größer als 50 mm aufweisen und/oder eine Bewegungsmöglichkeit um zumindest eine Achse um einen Winkel insbesondere größer als 15 °, bevorzugt größer als 30 ° und besonders bevorzugt größer als 45 ° aufweisen. Das zumindest eine Lagerelement und das zumindest eine weitere Lagerelement sind vorzugsweise aus einer Materialkombination aus einem Nichteisenmetall und Eisen gebildet. Das zumindest eine Lagerelement und das zumindest eine weitere Lagerelement sind vorzugsweise aus einer Materialkombination aus Aluminium und Stahl gebildet. Es sind jedoch auch weitere, einem Fachmann als sinnvoll erscheinende Materialkombinationen, wie beispielsweise Aluminium/Gummi oder Stahl/Gummi, denkbar. Alternativ ist es auch denkbar, dass das zumindest eine Lagerelement und das zumindest eine weitere Lagerelement zumindest teilweise aus demselben Material, beispielsweise Stahl oder Aluminium, gebildet sind.

Zudem wird vorgeschlagen, dass die Lagervorrichtung zumindest ein weiteres Lagerelement und zumindest eine weitere Schmierstofftasche zu einer Schmierung zumindest eines Teils einer Lagerlauffläche des zumindest einen weiteren Lagerelements umfasst, die zumindest teilweise durch ein zerspanungsfreies Fertigungsverfahren in das zumindest eine weitere Lagerelement eingebracht ist. Dadurch kann eine vorteilhaft zeitsparende, bevorzugt präzise und kostengünstige Herstellung der Lagervorrichtung erreicht werden. Insbesondere wenn in das zumindest eine weitere Lagerelement, zusätzlich zu dem zumindest einen Lagerelement mit der zumindest einen Schmierstofftasche, die zumindest eine weitere Schmierstofftasche eingebracht ist, kann eine bevorzugt gute und zuverlässige Schmierung der Lagervorrichtung erreicht werden. Das zerspanungsfreie Fertigungsverfahren kann als elektro-chemische Metallbearbeitung und/oder als Strahlen, insbesondere um einen definierten Traganteil, ausgebildet sein. Die zumindest eine weitere Schmierstofftasche ist zumindest teilweise durch Elysieren in das zumindest eine weitere Lagerelement eingebracht. Es ist jedoch auch denkbar, dass die zumindest eine weitere Schmierstofftasche zumindest teilweise durch ein anderes, einem Fachmann als sinnvoll erscheinendes elektro-chemisches Verfahren, wie beispielsweise als PECM-Verfahren (Pulsed Electrochemical Machining) oder als PEM-Verfahren (Precise Electrochemical Machining), in das zumindest eine weitere Lagerelement eingebracht ist. Das weitere Lagerelement ist vorzugsweise, insbesondere relativ zu dem Lagerelement, beweglich gelagert. Vorzugsweise ist die zumindest eine weitere Schmierstofftasche zumindest teilweise durch eine elektrochemische Metallbearbeitung in das zumindest eine weitere Lagerelement eingebracht.

Ferner wird vorgeschlagen, dass ein Verhältnis einer maximalen Breite der zumindest einen Schmierstofftasche zu einer maximalen Tiefe der zumindest einen Schmierstofftasche einem Wert zwischen 40 und 55 entspricht. Dadurch kann ein vorteilhaftes Schmierungsergebnis der Lagervorrichtung erreicht werden. Die maximale Breite der zumindest einen Schmierstofftasche ist vorzugsweise von einem Durchmesser der zumindest einen Schmierstofftasche gebildet. Vorzugsweise weist die zumindest eine Schmierstofftasche eine U-förmige Querschnittskontur auf. Die U-förmige Querschnittskontur kann gekrümmt und/oder abgewinkelt ausgebildet sein. Die zumindest eine Schmierstofftasche erstreckt sich vorzugsweise U-förmig, von der Lagerlauffläche des Lagerelements aus betrachtet, in ein Material des Lagerelements hinein. Eine Kante an einem Übergang der zumindest einen Schmierstofftasche zu der Lagerlauffläche ist vorzugsweise abgerundet ausgebildet. Dadurch kann ein vorteilhaft geringer Verschleiß eines korrespondierenden Lagerelements erreicht werden. Die zumindest eine Schmierstofftasche weist eine maximale Breite, insbesondere einen Durchmesser, auf, der insbesondere zwischen 1 mm und 3 mm, vorzugsweise zwischen 1,2 mm und 2,5 mm, bevorzugt zwischen 1,4 mm und 2 mm und besonders bevorzugt zwischen 1,6 mm und 1,8 mm beträgt. Die zumindest eine Schmierstofftasche weist eine maximale Tiefe, von der Lagerlauffläche des Lagerelements aus senkrecht betrachtet, auf, die insbesondere zwischen 0,02 mm und 0,05 mm, vorzugsweise zwischen 0,025 mm und 0,045 mm, bevorzugt zwischen 0,03 mm und 0,04 mm und besonders bevorzugt zwischen 0,032 mm und 0,038 mm beträgt. Besonders vorteilhaft weist die zumindest eine Schmierstofftasche eine maximale Tiefe von 0,035 mm auf.

Des Weiteren wird vorgeschlagen, dass die zumindest eine Schmierstofftasche, senkrecht zur Lagerlauffläche betrachtet, zumindest im Wesentlichen kreisförmig ausgebildet ist. Dadurch kann eine konstruktiv einfache Ausgestaltung der zumindest einen Schmierstofftasche erreicht werden. Unter "zumindest im Wesentlichen kreisförmig" soll in diesem Zusammenhang insbesondere verstanden werden, dass eine Kontur der zumindest einen Schmierstofftasche, insbesondere entlang der Lagerlauffläche betrachtet, insbesondere zumindest zu 50 %, vorzugsweise zumindest zu 70 %, bevorzugt zumindest zu 90 % und besonders bevorzugt zumindest nahezu zu 100 % eines Gesamtumfangs, einem Kreis entspricht. Es ist auch denkbar, dass die zumindest eine Schmierstofftasche eine andere, einem Fachmann als sinnvoll erscheinende Kontur, wie beispielsweise eine ovale, rechteckige oder polygonale Kontur, aufweist.

Zudem wird vorgeschlagen, dass die Lagervorrichtung eine Vielzahl an Schmierstofftaschen aufweist, die über zumindest einen Teil der zumindest einen Lagerlauffläche des zumindest einen Lagerelements verteilt angeordnet sind. Dadurch kann eine bevorzugt gleichmäßige Schmierung erreicht werden. Insbesondere bei einer zylinderförmigen Ausgestaltung der Lagerlauffläche sind die Schmierstofftaschen vorzugsweise in Umfangsrichtung umlaufend, insbesondere gleichmäßig, über die Lagerlauffläche verteilt angeordnet. Alternativ oder zusätzlich ist auch eine partielle Verteilung der Schmierstofftaschen, insbesondere über einen Teilbereich der Lagerlauffläche, denkbar. Dadurch kann eine gezielte Anordnung an Stellen der Lagerlauffläche mit einem erhöhten Schmierstoffbedarf erreicht werden.

Ferner wird eine Handwerkzeugmaschine mit der zumindest einen Lagervorrichtung, insbesondere eine Handwerkzeugmaschine mit einer Schlagwerkeinheit, die die zumindest eine Lagervorrichtung aufweist, vorgeschlagen. Dadurch kann eine bevorzugt kostengünstige und langlebige Ausgestaltung der Handwerkzeugmaschine erreicht werden. Unter einer "Handwerkzeugmaschine" soll insbesondere eine werkstückbearbeitende Maschine, beispielsweise ein Bohrhammer, ein Meißelhammer, ein Abbruchhammer oder ein Bohr- und/oder Schlaghammer und/oder eine andere, einem Fachmann als sinnvoll erscheinende Handwerkzeugmaschine, verstanden werden. Die Handwerkzeugmaschine ist vorzugsweise als tragbare Handwerkzeugmaschine ausgebildet. Die Handwerkzeugmaschine ist insbesondere als Elektrohandwerkzeugmaschine ausgebildet. Die Handwerkzeugmaschine kann sowohl von einer Akkuhandwerkzeugmaschine als auch von einer netzbetriebenen Handwerkzeugmaschine gebildet sein. Es ist jedoch auch denkbar, dass die Handwerkzeugmaschine beispielsweise als hydraulisch, pneumatisch oder verbrennungsmotorisch antreibbare Handwerkzeugmaschine ausgebildet ist. Unter einer "tragbaren Handwerkzeugmaschine" soll hier insbesondere eine Handwerkzeugmaschine zu einer Bearbeitung von Werkstücken verstanden werden, die von einem Bediener transportmaschinenlos transportiert werden kann. Die tragbare Handwerkzeugmaschine weist insbesondere eine Masse auf, die kleiner ist als 40 kg, bevorzugt kleiner ist als 10 kg und besonders bevorzugt kleiner ist als 5 kg. Vorzugsweise weist die Handwerkzeugmaschine zumindest einen zumindest teilweise schwingungsgedämpften Handgriff auf. Bevorzugt weist die Handwerkzeugmaschine eine Schnellwechselwerkzeugaufnahme, insbesondere eine SDSmax-Werkzeugaufnahme oder eine HEX-Werkzeugaufnahme, auf. Es sind jedoch auch andere, einem Fachmann als sinnvoll erscheinende Ausgestaltungen der Werkzeugaufnahme, wie beispielsweise als SDSplus-Werkzeugaufnahme, SDSquick-Werkzeugaufnahme, SDS-Werkzeugaufnahme, SDStop-Werkzeugaufnahme oder als Bohrfutter zu einer Aufnahme eines Einsatzwerkzeugs mit einem Rundschaft, denkbar.

Des Weiteren wird ein Verfahren zur Herstellung einer Lagervorrichtung vorgeschlagen, wobei in zumindest einem Verfahrensschritt zumindest eine Schmierstofftasche zumindest teilweise durch ein zerspanungsfreies Fertigungsverfahren in zumindest ein Lagerelement der Lagervorrichtung eingebracht wird. Dadurch kann eine bevorzugt präzise und vorteilhaft kostengünstige Herstellung der zumindest einen Schmierstofftasche der Lagervorrichtung erreicht werden. Das zerspanungsfreie Fertigungsverfahren kann als elektro-chemische Metallbearbeitung und/oder als Strahlen, insbesondere um einen definierten Traganteil, ausgebildet sein.

Zudem wird vorgeschlagen, dass die zumindest eine Schmierstofftasche in dem zumindest einen Verfahrensschritt teilweise durch eine elektro-chemische Metallbearbeitung in das zumindest eine Lagerelement eingebracht wird. Dadurch kann eine bevorzugt kostengünstige Herstellung der Lagervorrichtung mit einer vorteilhaft guten Schmierung erreicht werden. Ferner kann durch die elektro-chemische Metallbearbeitung die zumindest eine Schmierstofftasche auch in ein Lagerelement, das zumindest teilweise aus Aluminium gebildet ist, eingebracht werden. Die zumindest eine Schmierstofftasche wird zumindest teilweise durch Elysieren in das zumindest eine Lagerelement eingebracht. Es ist jedoch auch denkbar, dass die zumindest eine Schmierstofftasche zumindest teilweise durch ein anderes, einem Fachmann als sinnvoll erscheinendes elektro-chemisches Verfahren, wie beispielsweise als PECM-Verfahren (Pulsed Electrochemical Machining) oder als PEM-Verfahren (Precise Electrochemical Machining), in das zumindest eine Lagerelement eingebracht wird.

Ferner wird vorgeschlagen, dass das Verfahren zumindest einen Verfahrensschritt umfasst, in dem zumindest eine weitere Schmierstofftasche zumindest teilweise durch ein zerspanungsfreies Fertigungsverfahren in zumindest ein weiteres Lagerelement der Lagervorrichtung eingebracht wird. Das zerspanungsfreie Fertigungsverfahren kann als elektro-chemische Metallbearbeitung und/oder als Strahlen, insbesondere um einen definierten Traganteil, ausgebildet sein. Vorzugsweise wird die zumindest eine weitere Schmierstofftasche zumindest teilweise durch Elysieren in das zumindest eine weitere Lagerelement eingebracht. Es ist jedoch auch denkbar, dass die zumindest eine weitere Schmierstofftasche zumindest teilweise durch ein anderes, einem Fachmann als sinnvoll erscheinendes elektro-chemisches Verfahren, wie beispielsweise als PECM-Verfahren (Pulsed Electrochemical Machining) oder als PEM-Verfahren (Precise Electrochemical Machining), in das zumindest eine weitere Lagerelement eingebracht wird.

Die erfindungsgemäße Lagervorrichtung, die erfindungsgemäße Handwerkzeugmaschine und/oder das erfindungsgemäße Verfahren sollen hierbei nicht auf die oben beschriebene Anwendung und Ausführungsform beschränkt sein. Insbesondere können die erfindungsgemäße Lagervorrichtung, die erfindungsgemäße Handwerkzeugmaschine und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einem Schlagwerk und einer Lagervorrichtung in einer schematischen Seitenansicht,
- Fig. 2: einen Ausschnitt aus dem Schlagwerk der Handwerkzeugmaschine und die Lagervorrichtung in einer schematischen Schnittansicht und
- Fig. 3: ein schematisches Ablaufdiagramm eines Verfahrens zur Herstellung der Lagervorrichtung.

### Beschreibung des Ausführungsbeispiels

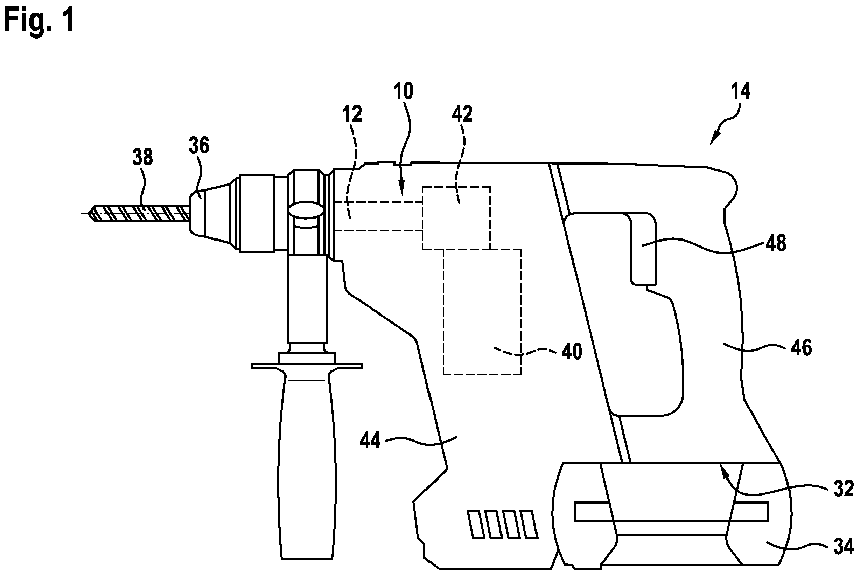

Figur 1 zeigt eine Handwerkzeugmaschine 14 mit einer Schlagwerkeinheit 12. Die Handwerkzeugmaschine 14 umfasst eine Lagervorrichtung 10 für die Schlagwerkeinheit 12. Die Handwerkzeugmaschine 14 ist als Elektrohandwerkzeugmaschine ausgebildet. Die Handwerkzeugmaschine 14 ist als Akkuhandwerkzeugmaschine ausgebildet und weist eine Akkuschnittstelle 32 auf, an der ein Handwerkzeugmaschinenakku 34 angeordnet ist. Es ist jedoch auch denkbar, dass die Handwerkzeugmaschine 14 als netzgebundene Handwerkzeugmaschine ausgebildet ist. Die Handwerkzeugmaschine 14 ist von einem Bohrhammer gebildet. Es sind jedoch auch andere, einem Fachmann als sinnvoll erscheinende Ausgestaltungen der Handwerkzeugmaschine 14, wie beispielsweise als Schlagbohrmaschine, Bohrmaschine oder Meißelhammer, denkbar. Die Handwerkzeugmaschine 14 umfasst eine Werkzeugaufnahme 36. Die Werkzeugaufnahme 36 der Handwerkzeugmaschine 14 ist dazu vorgesehen, ein Einsatzwerkzeug 38, das als Bohrer und/oder Meißel ausgebildet sein kann, aufzunehmen. Die Werkzeugaufnahme 36 ist von einer Schnellwechselwerkzeugaufnahme gebildet.

Weiterhin weist die Handwerkzeugmaschine 14 eine schematisch dargestellte Antriebseinheit 40 auf, die einen Elektromotor umfasst. Zudem weist die Handwerkzeugmaschine 14 eine schematisch dargestellte Getriebeeinheit 42 auf. Die Getriebeeinheit 42 weist dabei eine nicht näher dargestellte Umschalteinheit auf, die dazu vorgesehen ist, zwischen drehendem Abtrieb, schlagendem Abtrieb sowie drehendem und schlagendem Abtrieb umzuschalten. Ein von dem Elektromotor der Antriebseinheit 40 erzeugtes Drehmoment wird von der Getriebeeinheit 42 in eine von einem Bediener eingestellte Betriebsfunktion gewandelt und an die Schlagwerkeinheit 12 geleitet. Die Schlagwerkeinheit 12 ist direkt mit der Werkzeugaufnahme 36 verbunden. Die Antriebseinheit 40, die Getriebeeinheit 42 und die Schlagwerkeinheit 12 sind von einem Gehäuse 44 der Handwerkzeugmaschine 14 umschlossen. An das Gehäuse 44 schließt sich auf einer der Werkzeugaufnahme 36 abgewandten Seite der Handwerkzeugmaschine 14 ein Handgriff 46 an.

Die Handwerkzeugmaschine 14 weist eine nicht näher dargestellte Schaltervorrichtung auf, die ein Schaltelement 48 zur Aktivierung des Elektromotors der Antriebseinheit 40 umfasst. Das Schaltelement 48 ist als mechanisches Schaltelement 48 ausgebildet.

Das Schaltelement 48 ist von einem Taster gebildet. Es sind jedoch auch andere, einem Fachmann als sinnvoll erscheinende Ausgestaltungen des Schaltelements 48, wie beispielsweise zumindest teilweise als elektronisches Schaltelement oder als Touchpad, denkbar. Das Schaltelement 48 ist zu einem Schließen zumindest eines elektrischen Kontakts eines Schaltkreises zur Aktivierung der Energieversorgung der Antriebseinheit 40 vorgesehen. Das Schaltelement 48 ist von einem Bediener direkt betätigbar ausgebildet. Zur Aktivierung des Elektromotors der Antriebseinheit 40 drückt der Bediener der Handwerkzeugmaschine das Schaltelement 48 und versetzt die Handwerkzeugmaschine 14 somit in einen aktiven Betriebsmodus. Zu einer Beibehaltung dieses aktiven Betriebsmodus hält der Bediener das Schaltelement 48 gedrückt.

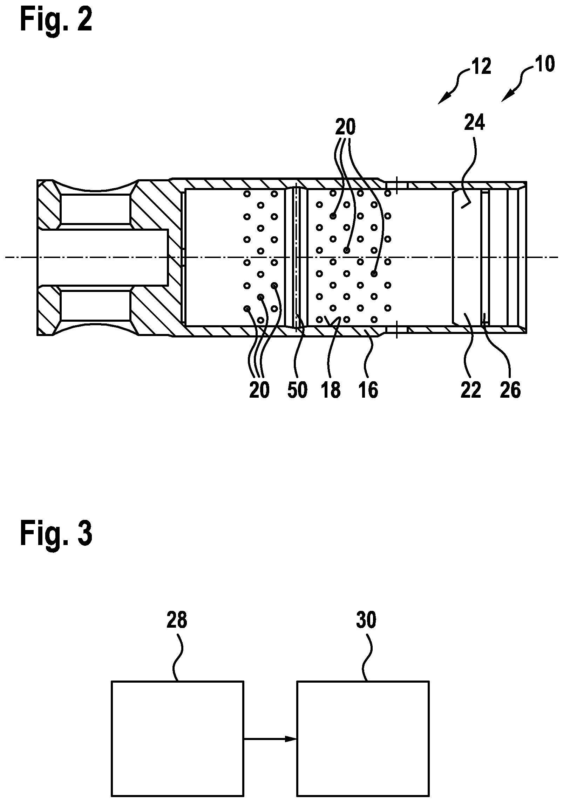

Die Lagervorrichtung 10 ist in Figur 2 näher gezeigt. Die Lagervorrichtung 10 weist zumindest ein Lagerelement 16 auf, das zumindest eine Lagerlauffläche 18 aufweist. Die Lagervorrichtung 10 weist genau ein Lagerelement 16 auf, das genau eine Lagerlauffläche 18 aufweist. Die Lagervorrichtung 10 weist zumindest ein weiteres beweglich gelagertes Lagerelement 22 auf, das zumindest eine korrespondierende Lagerlauffläche 24 aufweist. Die Lagervorrichtung 10 weist genau ein weiteres beweglich gelagertes Lagerelement 22 auf, das genau eine korrespondierende Lagerlauffläche 24 aufweist. Es ist jedoch auch eine abweichende Anzahl von Lagerelementen 16 bzw. weiteren Lagerelementen 22 und/oder Lagerlaufflächen 18 bzw. korrespondierenden Lagerlaufflächen 24 denkbar. Das Lagerelement 16 ist rohrförmig ausgebildet. Die Lagerlauffläche 18 ist an einer Innenseite des rohrförmigen Lagerelements 16 angeordnet. Das Lagerelement 16 ist von einem Hammerrohr gebildet. Das weitere Lagerelement 22 ist zylinderförmig ausgebildet. Das weitere Lagerelement 22 ist als Hammerkolben ausgebildet. Das weitere Lagerelement 22 ist relativ zu dem Lagerelement 16 beweglich gelagert. Das weitere Lagerelement 22 ist in dem Lagerelement 16 axial beweglich gelagert. In einem Betriebszustand führt das weitere Lagerelement 22 eine Linearbewegung relativ zu dem Lagerelement 16 durch. Die Lagervorrichtung 10 bildet einen Teil der Schlagwerkeinheit 12.

Die Lagervorrichtung 10 weist zumindest eine Schmierstofftasche 20 zu einer Schmierung zumindest eines Teils der Lagerlauffläche 18 des Lagerelements 16 auf. Die Lagervorrichtung 10 weist mehrere Schmierstofftaschen 20 zu einer Schmierung der Lagerlauffläche 18 des Lagerelements 16 auf. Die Schmierstofftaschen 20 sind dazu vorgesehen, einen Schmierstoff aufzunehmen und in einem Betriebszustand der Schlagwerkeinheit 12 einen Schmierstofffilm für die Lagerlauffläche 18 zur Verfügung zu stellen. Der Schmierstoff ist von einem Fett gebildet. Es ist jedoch auch denkbar, dass der Schmierstoff beispielsweise von einem Öl, einer Seife, einem Kohlenstoff und/oder einem MoS₂ gebildet ist. Die Schmierstofftaschen 20 sind zumindest teilweise durch ein zerspanungsfreies Fertigungsverfahren in das Lagerelement 16 eingebracht. Die Schmierstofftaschen 20 sind durch ein zerspanungsfreies Fertigungsverfahren in das Lagerelement 16 eingebracht. Die Schmierstofftaschen 20 sind zumindest teilweise durch eine elektro-chemische Metallbearbeitung in das Lagerelement 16 eingebracht. Die Schmierstofftaschen 20 sind durch ein elektro-chemisches Abtragungsverfahren in das Lagerelement 16 eingebracht. Die Schmierstofftaschen 20 sind durch Elysieren in das Lagerelement 16 eingebracht. Es ist auch denkbar, dass die Schmierstofftaschen 20 durch ein PECM-Verfahren (Pulsed Electrochemical Machining), durch ein PEM-Verfahren (Precise Electrochemical Machining) oder durch Strahlen, insbesondere um einen definierten Traganteil, in das Lagerelement 16 eingebracht sind.

Die Lagervorrichtung 10 weist eine Vielzahl von Schmierstofftaschen 20 auf, die über zumindest einen Teil der Lagerlauffläche 18 des Lagerelements 16 verteilt angeordnet sind. Die Schmierstofftaschen 20 sind über die Lagerlauffläche 18 des Lagerelements 16 verteilt angeordnet. Die Schmierstofftaschen 20 sind gleichmäßig über die Lagerlauffläche 18 des Lagerelements 16 verteilt angeordnet. Die Schmierstofftaschen 20 sind, in Umfangsrichtung des Lagerelements 16 betrachtet, über die Lagerlauffläche 18 des Lagerelements 16 verteilt angeordnet. Die Schmierstofftaschen 20 sind jeweils beabstandet zueinander angeordnet. Die Schmierstofftaschen 20 sind, in Umfangsrichtung des Lagerelements 16 betrachtet, in Reihen angeordnet. Es sind mehrere, in Axialrichtung des Lagerelements 16 betrachtet, nacheinander angeordnete Reihen von Schmierstofftaschen 20 vorgesehen. In Axialrichtung des Lagerelements 16 betrachtet, ist zwischen zwei der Reihen der Schmierstofftaschen 20 ein Freistich 50 in die Lagerlauffläche 18 des Lagerelements 16 eingebracht.

Die Schmierstofftaschen 20 sind, senkrecht zur Lagerlauffläche 18 betrachtet, zumindest im Wesentlichen kreisförmig ausgebildet. Die Schmierstofftaschen 20 sind, senkrecht zur Lagerlauffläche 18 betrachtet, kreisförmig ausgebildet. Die Schmierstofftaschen 20 weisen jeweils eine maximale Breite auf, die zwischen 1,5 mm und 2,0 mm beträgt. Die Schmierstofftaschen 20 weisen jeweils eine maximale Breite von 1,6 mm auf. Es ist jedoch auch denkbar, dass die Schmierstofftaschen 20 jeweils eine maximale Breite von 1,8 mm oder einen anderen, einem Fachmann als sinnvoll erscheinenden Wert aufweisen. Die maximale Breite der Schmierstofftaschen 20 ist als Durchmesser der Schmierstofftaschen 20 ausgebildet. Die Schmierstofftaschen 20 weisen eine maximale Tiefe auf, die zwischen 0,025 mm und 0,05 mm beträgt. Die Schmierstofftaschen 20 weisen jeweils eine maximale Tiefe von 0,035 mm auf. Es ist jedoch auch denkbar, dass die Schmierstofftaschen 20 jeweils eine andere, einem Fachmann als sinnvoll erscheinende maximale Tiefe aufweisen. Ein Verhältnis der maximalen Breite der Schmierstofftaschen 20 zur maximalen Tiefe der Schmierstofftaschen 20 entspricht jeweils einem Wert zwischen 40 und 55. Das Verhältnis der maximalen Breite zur maximalen Tiefe der Schmierstofftaschen 20 entspricht jeweils einem Wert von 45,7. Die Schmierstofftaschen 20 bilden eine Struktur in einem Teilbereich der Lagerlauffläche 18, die einer Oberflächenstruktur eines Golfballs ähnelt. Die Schmierstofftaschen 20 bilden eine golfballartige Oberflächenstruktur der Lagerlauffläche 18. Es ist jedoch auch denkbar, dass die einzelnen Schmierstofftaschen 20 beispielsweise über Kanäle miteinander verbunden sind.

Das Lagerelement 16 und das korrespondierende weitere Lagerelement 22 sind zumindest teilweise aus unterschiedlichen Materialien gebildet. Das Lagerelement 16 ist aus einem Metall gebildet. Das Lagerelement 16 ist aus Stahl gebildet. Das weitere Lagerelement 22 ist aus einem Metall gebildet. Das weitere Lagerelement 22 ist aus Aluminium gebildet. Es sind jedoch auch beliebige andere, einem Fachmann als sinnvoll erscheinende Kombinationen, wie beispielsweise Stahl/Gummi, denkbar. Insbesondere bei einer Ausgestaltung, bei der das Lagerelement 16 aus Stahl und das weitere Lagerelement 22 aus Gummi gebildet sind, weist vorzugsweise lediglich das aus Stahl ausgebildete Lagerelement 16 Schmierstofftaschen 20 auf.

Die Lagervorrichtung 10 weist zumindest eine weitere Schmierstofftasche 24 zu einer Schmierung zumindest eines Teils einer Lagerlauffläche 24 des weiteren Lagerelements 22 auf. Die Lagervorrichtung 10 weist genau eine weitere Schmierstofftasche 26 zur Schmierung der Lagerlauffläche 24 des weiteren Lagerelements 22 auf. Es ist jedoch auch denkbar, dass in das weitere Lagerelement 22 mehrere weitere Schmierstofftaschen 26 eingebracht sind. Die weitere Schmierstofftasche 26 ist als, in Umfangsrichtung des weiteren Lagerelements 22 betrachtet, umlaufende Nut ausgebildet. Es sind jedoch auch andere, einem Fachmann als sinnvoll erscheinende Ausgestaltungen der weiteren Schmierstofftasche 26 denkbar. Die Schmierstofftasche 26 ist dazu vorgesehen, einen Schmierstoff aufzunehmen und in einem Betriebszustand der Schlagwerkeinheit 12 eine Schmierstofffilm für die Lagerlauffläche 24 zur Verfügung zu stellen. Die weitere Schmierstofftasche 26 ist zumindest teilweise durch ein zerspanungsfreies Fertigungsverfahren in das weitere Lagerelement 22 eingebracht. Die Schmierstofftasche 26 ist durch ein zerspanungsfreies Fertigungsverfahren in das weitere Lagerelement 22 eingebracht. Die weitere Schmierstofftasche 26 ist zumindest teilweise durch eine elektro-chemische Metallbearbeitung in das weitere Lagerelement 22 eingebracht. Die weitere Schmierstofftasche 26 ist durch ein elektro-chemisches Abtragungsverfahren in das weitere Lagerelement 22 eingebracht. Die weitere Schmierstofftasche 26 ist durch Elysieren in das weitere Lagerelement 22 eingebracht. Es ist auch denkbar, dass die weitere Schmierstofftasche 26 durch ein PECM-Verfahren (Pulsed Electrochemical Machining), durch ein PEM-Verfahren (Precise Electrochemical Machining) oder durch Strahlen, insbesondere um einen definierten Traganteil, in das weitere Lagerelement 22 eingebracht ist.

Es ist jedoch auch denkbar, dass lediglich in das Lagerelement 16 oder in das weitere Lagerelement 22 zumindest eine Schmierstofftasche 20, 26 zur Schmierung der korrespondierenden Lagerlaufflächen 18, 24 eingebracht ist.

In Figur 3 ist ferner ein Blockschaltbild eines Verfahrens zur Herstellung der Lagervorrichtung 10 dargestellt. Das Verfahren weist zumindest einen Verfahrensschritt 28 auf, in dem die Schmierstofftaschen 20 zumindest teilweise durch ein zerspanungsfreies Fertigungsverfahren in das Lagerelement 16 der Lagervorrichtung 10 eingebracht werden. In dem Verfahrensschritt 28 werden die Schmierstofftaschen 20 durch ein zerspanungsfreies Fertigungsverfahren in das Lagerelement 16 der Lagervorrichtung 10 eingebracht. In dem Verfahrensschritt 28 werden die Schmierstofftaschen 20 durch ein elektro-chemisches Abtragungsverfahren, insbesondere eine elektro-chemische Metallbearbeitung, in das Lagerelement 16 der Lagervorrichtung 10 eingebracht. In dem Verfahrensschritt 28 werden die Schmierstofftaschen 20 durch Elysieren in das Lagerelement 16 der Lagervorrichtung 10 eingebracht. Es ist jedoch auch denkbar, dass in dem Verfahrensschritt 28 die Schmierstofftaschen 20 durch ein PECM-Verfahren (Pulsed Electrochemical Machining), durch ein PEM-Verfahren (Precise Electrochemical Machining) oder durch Strahlen, insbesondere um einen definierten Traganteil, in das Lagerelement 16 der Lagervorrichtung 10 eingebracht werden.

Das Verfahren weist zumindest einen weiteren Verfahrensschritt 30 auf, in dem die weitere Schmierstofftasche 26 zumindest teilweise durch ein zerspanungsfreies Fertigungsverfahren in das weitere Lagerelement 22 der Lagervorrichtung 10 eingebracht wird. In dem Verfahrensschritt 30 wird die weitere Schmierstofftasche 26 durch ein zerspanungsfreies Fertigungsverfahren in das weitere Lagerelement 22 der Lagervorrichtung 10 eingebracht. In dem Verfahrensschritt 30 wird die weitere Schmierstofftasche 26 durch ein elektro-chemisches Abtragungsverfahren in das weitere Lagerelement 22 der Lagervorrichtung 10 eingebracht. In dem Verfahrensschritt 30 wird die weitere Schmierstofftasche 26 durch Elysieren in das weitere Lagerelement 22 der Lagervorrichtung 10 eingebracht. Es ist jedoch auch denkbar, dass in dem Verfahrensschritt 30 die weitere Schmierstofftasche 26 durch ein PECM-Verfahren (Pulsed Electrochemical Machining), durch ein PEM-Verfahren (Precise Electrochemical Machining) oder durch Strahlen, insbesondere um einen definierten Traganteil, in das weitere Lagerelement 22 der Lagervorrichtung 10 eingebracht wird.

Die Verfahrensschritte werden nacheinander durchgeführt. Es ist jedoch auch denkbar, dass die Verfahrensschritte 28, 30 zumindest teilweise, vorzugsweise vollständig, zeitgleich durchgeführt werden.

## Patentansprüche

1. Lagervorrichtung, insbesondere für eine Schlagwerkeinheit (12) einer Handwerkzeugmaschine (14), mit zumindest einem Lagerelement (16), das zumindest eine Lagerlauffläche (18) aufweist, und mit zumindest einer Schmierstofftasche (20) zu einer Schmierung zumindest eines Teils der Lagerlauffläche (18) des zumindest einen Lagerelements (16), **dadurch gekennzeichnet, dass** die zumindest eine Schmierstofftasche (20) zumindest teilweise durch ein zerspanungsfreies Fertigungsverfahren in das zumindest eine Lagerelement (16) eingebracht ist.

2. Lagervorrichtung nach Anspruch 1, **dadurch gekennzeichnet, dass** die zumindest eine Schmierstofftasche (20) zumindest teilweise durch eine elektrochemische Metallbearbeitung in das zumindest eine Lagerelement (16) eingebracht ist.

3. Lagervorrichtung nach Anspruch 1 oder 2, **gekennzeichnet durch** zumindest ein weiteres Lagerelement (22), das zumindest eine korrespondierende Lagerlauffläche (24) aufweist, wobei das zumindest eine Lagerelement (16) und das zumindest eine weitere Lagerelement (22) zumindest teilweise aus unterschiedlichen Materialien gebildet sind.

4. Lagervorrichtung nach einem der vorhergehenden Ansprüche, **gekennzeichnet durch** zumindest ein weiteres Lagerelement (22) und zumindest eine weitere Schmierstofftasche (26) zu einer Schmierung zumindest eines Teils einer Lagerlauffläche (24) des zumindest einen weiteren Lagerelements (22), die zumindest teilweise **durch** ein zerspanungsfreies Fertigungsverfahren in das zumindest eine weitere Lagerelement (22) eingebracht ist.

5. Lagervorrichtung nach einem der vorhergehenden Ansprüche, **dadurch gekennzeichnet, dass** ein Verhältnis einer maximalen Breite der zumindest einen Schmierstofftasche (20) zu einer maximalen Tiefe der zumindest einen Schmierstofftasche (20) einem Wert zwischen 40 und 55 entspricht.

6. Lagervorrichtung nach einem der vorhergehenden Ansprüche, **dadurch gekennzeichnet, dass** die zumindest eine Schmierstofftasche (20), senkrecht zur Lagerlauffläche (18) betrachtet, zumindest im Wesentlichen kreisförmig ausgebildet ist.

7. Lagervorrichtung nach einem der vorhergehenden Ansprüche, **gekennzeichnet durch** eine Vielzahl an Schmierstofftaschen (20), die über zumindest einen Teil der zumindest einen Lagerlauffläche (18) des zumindest einen Lagerelements (16) verteilt angeordnet sind.

8. Handwerkzeugmaschine mit zumindest einer Lagervorrichtung (10) nach einem der vorhergehenden Ansprüche, insbesondere Handwerkzeugmaschine (14) mit einer Schlagwerkeinheit (12), die zumindest eine Lagervorrichtung (10) nach einem der vorhergehenden Ansprüche aufweist.

9. Verfahren zur Herstellung einer Lagervorrichtung (10) nach einem der Ansprüche 1 bis 7, **dadurch gekennzeichnet, dass** in zumindest einem Verfahrensschritt (28) zumindest eine Schmierstofftasche (20) zumindest teilweise durch ein zerspanungsfreies Fertigungsverfahren in zumindest ein Lagerelement (16) der Lagervorrichtung (10) eingebracht wird.

10. Verfahren nach Anspruch 9, **dadurch gekennzeichnet, dass** die zumindest eine Schmierstofftasche (20) in dem zumindest einen Verfahrensschritt (28) teilweise durch eine elektro-chemische Metallbearbeitung in das zumindest eine Lagerelement (16) eingebracht wird.

11. Verfahren nach Anspruch 9 oder 10, **gekennzeichnet durch** zumindest einen Verfahrensschritt (30), in dem zumindest eine weitere Schmierstofftasche (26) zumindest teilweise **durch** ein zerspanungsfreies Fertigungsverfahren in zumindest ein weiteres Lagerelement der Lagervorrichtung eingebracht wird.
